# EUROPÄISCHE PATENTSCHRIFT

(11) **EP 3 095 552 B1**
(45) Veröffentlichungstag und Bekanntmachung des Hinweises auf die Patenterteilung: **06.12.2017**
(21) Anmeldenummer: 16001164.9
(22) Anmeldetag: 21.05.2016
(51) Int. Cl.: B23P 9/00, C21D 7/10

(54) **KALIBRIERWERKZEUG**
CALIBRATION TOOL
OUTIL D'ÉTALONNAGE

(30) Priorität: 22.05.2015 DE 202015102633 U
(43) Veröffentlichungstag der Anmeldung: 23.11.2016
(73) Patentinhaber: Fink, Martin, 72461 Albstadt (DE)
(72) Erfinder: Fink, Martin, 72461 Albstadt (DE)

(56) Entgegenhaltungen:
- EP-A1- 2 913 145
- CH-A5- 565 618
- DE-A1-102004 025 622
- DE-U1-202004 003 358
- JP-A- H08 294 733
- US-A- 5 150 996
- GOLANT Y U K ET AL: "Impact finisher for thread ways - has deforming tools in helix at lead angle equal to work lead angle, in cage which can rotate about its axis", WPI / THOMSON,, Bd. 1981, Nr. 12, 18. Juli 1980 (1980-07-18), XP002740456, -& SU 747 598 A1 (MOGILEVSKIJ AVTOMOBIL Z [SU]) 15. Juli 1980 (1980-07-15)

## Beschreibung

Die Erfindung betrifft ein Kalibrierwerkzeug zum Bearbeiten einer Vertiefung in einem Werkstück auf ein Endmaß, wobei die Vertiefung in einer Durchgangsbohrung des Werkstücks angeordnet ist.

Aus der DE 10 2004 025 622 A1 ist eine Vorrichtung zur Bearbeitung einer Vertiefung in einem Werkstück bekannt, durch welches insbesondere Passfedernuten in einem gehärteten Werkstück auf ein Endmaß bearbeitet werden. Hierzu ist eine Zugstange vorgesehen, welche eine Kassette mit mehreren Schneiden aufnimmt, um durch eine spanende Bearbeitung Seitenflächen beziehungsweise Passflächen einer Passfedernut zu bearbeiten. Diese Bearbeitung weist den Nachteil auf, dass ein kostenintensives Werkzeug eingesetzt wird. Darüber hinaus wird aufgrund der spanenden Bearbeitung der gehärteten Oberfläche die Maßhaltigkeit der Passfedernut nicht gewährleistet.

Aus der EP 2 913 145 A1 ist ein Werkzeug bekannt, bei dem ein runder, länglicher Grundkörper einen Stift aufweist, der sich einseitig radial nach außen erstreckt. Dieses Werkzeug dient zur Endbearbeitung von Vertiefungen und muss von Hand in die Bohrung eingesetzt sowie der Stift zur Vertiefung ausgerichtet werden. Dieses Werkzeug weist den Nachteil aus, dass der Einsatz für mittlere bis große Serien nicht möglich ist.

Aus der SU 747598B ist ein Werkzeug zum Einbringen von gewindeförmigen Vertiefungen für Flüssigkeitslager bekannt. Dieses Werkzeug weist einen Grundkörper sowie eine Hülse auf, wobei zwischen der Hülse und dem Grundkörper Kugeln geführt sind. In der Hülse sind radial nach außen weisende Stifte vorgesehen, welche durch die Kugeln radial nach außen bewegt werden, sofern die Kugeln mit Luft beaufschlagt werden.

Aus der JP H08 294733 A ist ein Werkzeug mit einem Dorn bekannt, welcher einen Stift aufweist, der sich beidseitig radial gegenüber der Mantelfläche nach außen erstreckt. Dieses Werkzeug dient zum Einbringen von Vertiefungen in eine Bohrung für ein Fluidlager. Hierzu weist der Stift, der mit seinen beiden Enden gegenüber der Mantelfläche des Dorns radial hervorragt, entsprechende Stirnflächen zum Einbringen der Vertiefung auf.

Aus der US 5 150 996 A ist eine Vorrichtung zur Führung einer Räumnadel zur Herstellung einer Vertiefung in einem Werkstück bekannt, durch welches insbesondere Paßfedernuten hergestellt werden können. Die Vorrichtung besteht aus 2 keilförmigen Teilen, von denen ein Teil eine Führungsaussparung für die Räumnadel aufweist.
Durch axiale Verschiebung der Vorrichtungsteile zueinander kann Vorrichtung zur Räumnadelführung an den zu räumenden Bohrungsdurchmesser angepasst werden.

Der Erfindung liegt die Aufgabe zugrunde, ein Werkzeug, durch welches eine kostengünstige Bearbeitung einer Vertiefung (vorzugsweise eine Paßfedernut) in einer Durchbrechung eines Werkstücks gegeben ist, wobei insbesondere eine Endbearbeitung des Werkstücks auf ein Endmaß ermöglicht sein soll. Diese Aufgabe wurde durch ein Kalibrierwerkzeug mit den Merkmalen des Anspruchs 1 gelöst. Vorteilhafte Ausgestaltungen des Werkzeugs sind in den Unteransprüchen angegeben.

Die Aufgabe wird durch ein Werkzeug gelöst, welches einen Kalibrierstifthalter umfasst, der zumindest einen Kalibrierstift aufnimmt, der rechtwinklig zur Längsachse des Grundkörpers im Kalibrierstifthalter angeordnet ist, wobei der Stift in einer Bohrung des Grundkörpers auswechselbar angeordnet und mit einer Klemm-, Spann- oder Befestigungselement fixiert ist und eine Führungsbuchse mit einer U-förmigen Führung aufweist, in welche der Kalibrierstifthalter einsetzbar ist, der Kalibrierstifthalter gegenüber der U-förmigen Führung nach außen hervorsteht und der Kalibrierstifthalter entlang der Führung verfahrbar ist. Nach dem Einsetzen der Führungsbuchse und des Kalibrierstifthalters in die Durchbrechung des Werkstücks wird durch eine Verfahrbewegung des Kalibrierstifthalters entlang der Führungsbuchse der Kalibrierstift durch die Vertiefung der Durchbrechung hindurch geführt, so dass zwei einander gegenüber liegende Seitenflächen der Vertiefung auf ein Endmaß aufgeweitet werden. Durch eine solche spanlose Bearbeitung kann eine hohe Maßhaltigkeit erzielt werden. Gleichzeitig bleiben die gehärteten Oberflächen aufrechterhalten. Eine Beeinträchtigung durch Verzug wie bei einer spanabhebenden Bearbeitung ist nicht gegeben. Darüber hinaus weist dieses Werkzeug den Vorteil auf, dass gleichzeitig beim Hindurchführen des Kalibrierstiftes durch die Vertiefung eine Glättung der Seitenflächen der Vertiefung durch den Kalibrierstift erfolgt, der mit einem Anpressdruck an den Seitenflächen der Vertiefung angreift. Dadurch kann die Montage von weiteren Bauteilen, wie beispielsweise Passfeder, erleichtert sein. Dieses Werkzeug weist des Weiteren den Vorteil auf, dass bei Werkstücken mit einem großen Durchmesser der Durchbrechung nur die Führungsbuchse an die Größe anzupassen ist, wobei die Größe des Kalibrierstifthalters gleich bleiben kann, so dass die bewegte Masse zum Kalibrieren gleich bleiben kann.
Bevorzugt ist der Kalibrierstifthalter als eine längliche Leiste ausgebildet, welche einen ersten Führungsabschnitt aufweist, dessen Querschnitt komplementär zur U-förmigen Führung der Führungsbuchse ist. Dadurch kann in einfacher Weise eine sichere Führung und Aufnahme der länglichen Leiste in der Führungsbuchse erzielt werden.
Bevorzugt ist der erste Führungsabschnitt des Kalibrierstifthalters rechteckförmig oder quadratisch ausgebildet. Dadurch können einfache Geometrien für den Körper des Kalibrierstifthalters geschaffen werden sowie eine einfache und kostengünstige Herstellung der Führung in der Führungsbuchse ermöglicht sein.
Der Kalibrierstifthalter weist bevorzugt einen zweiten Führungsabschnitt auf, welcher dem ersten Führungsabschnitt gegenüber liegt. Dieser zweite Führungsabschnitt weist bevorzugt einen Querschnitt auf, der komplementär zur Vertiefung der Durchbrechung ausgebildet ist. Vorzugsweise ist auch dieser Querschnitt rechteckförmig oder quadratisch ausgebildet. Insbesondere dann, wenn eine Passfedernut auf ein Endmaß zu bearbeiten ist.
Bevorzugt steht der Kalibrierstift seitlich gegenüber den zwei seitlichen Führungsflächen des zweiten Führungsstiftes am Kalibrierstifthalter hervor. Der Überstand gegenüber den seitlichen Führungsflächen ist gering gehalten, damit eine möglichst große Anlage und Abstützfläche für den Kalibrierstift durch den zweiten Führungsabschnitt geschaffen ist.
Des Weiteren weist der zweite Führungsabschnitt des Kalibrierstifthalters vorteilhafterweise zwei seitliche Führungsflächen auf, die im Abstand ein Untermaß gegenüber der Breite der auf Endmaß zu bearbeitenden Vertiefung in der Durchbrechung des Werkstücks aufweisen. Dadurch kann ein leichtes Hindurchführen des Kalibrierstifthalters durch die Durchbrechung entlang der Führung der Führungsbuchse erfolgen und gleichzeitig eine Ausrichtung des Kalibrierstiftes ermöglicht sein.

Des Weiteren ist die Höhe des zweiten Führungsabschnittes des Kalibrierstifthalters mit einem Abstand zum Grund der zu bearbeitenden Vertiefung angeordnet. Der Kalibrierstift ragt bevorzugt gegenüber einer Oberseite des zweiten Führungsabschnitts heraus.

Der Kalibrierstift ist mit seiner Längsachse vorzugsweise rechtwinklig zur Längsachse des Kalibrierstifthalters angeordnet. Dadurch können einfache Geometrien und kostengünstige Konstruktionen geschaffen sein. Zudem können dadurch die auf den Kalibrierstift wirkenden Kräfte während dem Bearbeiten auf Endmaß sicher aufgenommen werden.

Des Weiteren ist der Kalibrierstift in einer Bohrung des als Leiste ausgebildeten Kalibrierstifthalters auswechselbar angeordnet. Dadurch kann bei einem auftretenden Verschleiß des Kalibrierstiftes eine schnelle Auswechslung erfolgen.

Des Weiteren ist der Kalibrierstift bevorzugt durch zumindest ein Klemm-, Spann- oder Befestigungselement, insbesondere eine Befestigungsschraube, in der Bohrung des Kalibrierstifthalters fixiert. Dadurch kann die schnelle Auswechslung der Kalibrierstifte unterstützt werden. Insbesondere ermöglicht die Befestigungsschraube oder ein Befestigungsgewindestift eine einfache mechanische Lösung.

An einer Stirnseite des Kalibrierstifthalters ist eine Aufnahme für ein Zug-, Druck- oder Presswerkzeug vorgesehen. Dadurch kann der Kalibrierstifthalter für die Endbearbeitung entweder auf Zug oder auf Druck beansprucht werden, um den Kalibrierstift durch die Vertiefung hindurch zu führen. Somit können sowohl Maschinen eingesetzt werden, bei denen hydraulische Zylinder oder hydraulische oder sonstige Antriebe auf Zug oder Druck arbeiten.

Eine bevorzugte Ausführungsform des Kalibrierstiftes sieht vor, dass dieser zylindrisch ausgebildet ist. Solche Teile lassen sich einfach und kostengünstig herstellen und ggf. härten.

Des Weiteren besteht der Kalibrierstift bevorzugt als Pressstift aus einem gehärteten Material oder Hartmetall. Dadurch kann eine erhöhte Gebrauchsdauer erzielt werden.

Eine weitere bevorzugte Ausführungsform des Kalibrierstiftes sieht vor, dass dieser als Wendestift ausgebildet ist, der zwei voneinander abweichende Endbearbeitungsmaße aufweist. Bevorzugt kann dieser Kalibierstift in einer Aufnahme oder Bohrung in dem Kalibrierstifthalter angeordnet sein. Aufgrund des Einsatzes von Klemm- oder Spannwerkzeugen können unterschiedliche Endbearbeitungsmaße des Kalibrierstiftes auch sicher gespannt werden.

Die Führungsbuchse ist bevorzugt als zylindrischer Körper mit zumindest einer durchgehenden Längsnut als U-förmige Führung ausgebildet, wobei an einem Ende des zylindrischen Körpers ein Flanschabschnitt vorgesehen ist. Dadurch kann ein einfacher Halter gebildet werden, um den Kalibrierstifthalter aufzunehmen und entlang der Führungsbuchse verfahrbar aufzunehmen, um die Vertiefung der Durchbrechung aufzuweiten.

Des Weiteren entspricht der Außenumfang des zylindrischen Körpers bevorzugt dem Durchmesser der Durchbrechung des Werkstückes. Dadurch kann eine sichere und verkippungsstabile Aufnahme des Werkstücks zur Führungsbuchse vorgesehen sein.

Das Werkzeug ist vorteilhafterweise zur Bearbeitung von einer Passfedernut eines Antriebsrades, Zahnrades oder dergleichen vorgesehen.
Diese Aufgabe wird des Weiteren durch ein Verfahren zur Bearbeitung einer Passfedenut in einem Werkstück auf ein Endmaß gelöst, bei dem ein Werkzeug mit einem Dom auf einem länglichen Grundkörper vorgesehen ist, der zumindest ein gegenüber einer Mantelfläche des Grundkörpers hervorstehenden Stift ausweist, der beim Einsetzen des Doms in die Durchbrechung des Werkstücks mit seinen seitlichen Flächenabschnitten in die Vertiefung eingreift und zumindest zwei einander gegenüberliegende Seitenflächen der Vertiefung auf ein Bearbeitungsmaß oder das Endmaß aufgeweitet wird.
Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
- Figur 1: eine perspektivische Ansicht eines Kalibrierwerkzeugs,
- Figur 2: eine schematische Schnittansicht eines Kalibrierstifthalters des Kalibrierwerkzeugs gemäß Figur 1,
- Figur 3: eine schematische Ansicht oben auf den Kalibrierstifthalter des Kalibrierwerkzeugs gemäß Figur 1,
- Figur 4: eine Stirnansicht des Kalibrierstifthalters gemäß Figur 3,
- Figur 5: eine perspektivische Ansicht des Kalibrierwerkzeugs vor dem Überführen in eine Arbeitsposition zu einem Werkstück, und
- Figur 6: eine perspektivische Ansicht des Kalibrierwerkzeugs in einer Arbeitsposition im Werkstück.

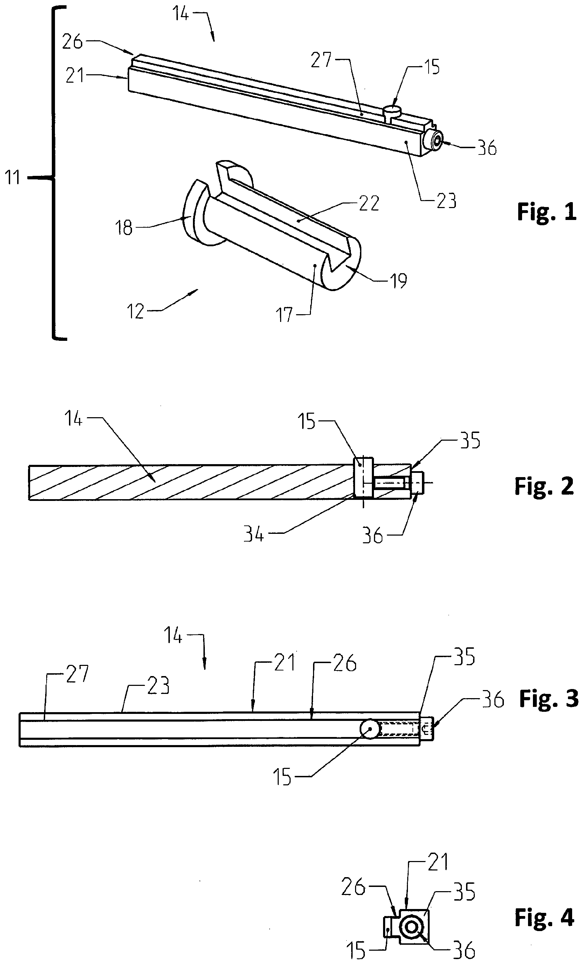

In Figur 1 ist perspektivisch ein Kalibrierwerkzeug 11 dargestellt, welches aus einer Führungsbuchse 12 und einem Kalibrierstifthalter 14 mit einem Kalibrierstift 15 besteht.
Die Führungsbuchse 12 umfasst einen zylindrischen Körper 17, der an einem stirnseitigen Ende einen Flanschabschnitt 18 aufweist. Entlang der gesamten Führungsbuchse 12 erstreckt sich eine U-förmige Führung 19, welche auch als nutenförmige Vertiefung ausgebildet ist.
Der Kalibrierstifthalter 14 ist als längliche Leiste ausgebildet, welche einen ersten Führungsabschnitt 21 aufweist, der beispielsweise eine komplementären Querschnitt zur U-förmigen Führung 19 umfasst, damit der Kalibrierstifthalter 14 in der U-förmigen Führung 19 der Führungsbuchse 12 positionierbar und entlang der Führung 19 verfahrbar ist. Bevorzugt entspricht die Höhe von Seitenabschnitten 22 der U-förmigen Führung 19 der Höhe von Längsseiten 23 des ersten Führungsabschnitts 21 des Klemmstifthalters 14, so dass dieser Klemmstifthalter 14 seitlich vollständig durch die Führung 19 geführt ist. Alternativ kann die Höhe der Längsseite 23 des Klemmstifthalters 14 auch kleiner als die Höhe der Seitenabschnitte 22 der U-förmigen Führung 19 ausgebildet sein.

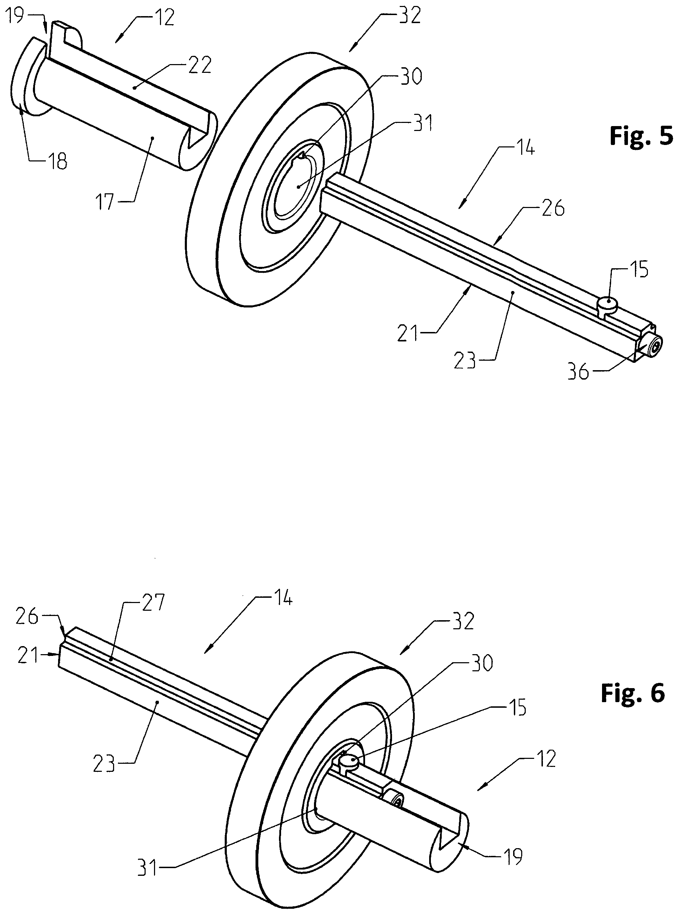

Dem ersten Führungsabschnitt 21 des Kalibrierstifthalters 14 gegenüber liegend ist ein zweiter Führungsabschnitt 26 vorgesehen, der ebenfalls wie der erste Führungsabschnitt 21 vorzugsweise einen rechteckförmigen oder quadratischen Querschnitt aufweist. Dieser zweite Führungsabschnitt 26 ist in der Breite schmaler ausgebildet als der erste Führungsabschnitt 21. Der zweite Führungsabschnitt 26 weist zwei einander gegenüber liegende Seitenflächen 27 auf, deren Abstand ein Untermaß gegenüber der auf Endmaß zu bearbeitenden Vertiefung 30 einer Durchbrechung 31 am Werkstück 32 (Figur 5) aufweist. Bevorzugt erstreckt sich die Länge des zweiten Führungsabschnitts 26 über die gesamte Länge des ersten Führungsabschnitts 21 und bildet gemeinsam die längliche Leiste des Kalibrierstifthalters 14.

Der Kalibrierstifthalter 14 nimmt den Kalibrierstift 15 in einer Bohrung 34 auf, dessen Längsachse rechtwinklig zur Längsachse des Kalibrierstifthalters 14 ausgerichtet ist. Dieser Kalibrierstift 15 ist nahe einem stirnseitigen Ende des Kalibrierstiftes 14 angeordnet. An einer Stirnfläche 35 des Kalibrierstifthalters 14 greift ein Befestigungselement 36 an, welches durch Klemmung den Kalibrierstift 15 in der Bohrung 34 des Kalibrierstifthalters 14 fixiert.

In einem Längsschnitt gemäß Figur 2 des Kalibrierstifthalters 14 ist schematisch die Fixierung des Kalibrierstifts 15 durch das Befestigungselement 36 dargestellt. Die Bohrung 34 ist bevorzugt als Durchgangsbohrung ausgebildet. Diese kann auch als Sacklochbohrung ausgebildet sein. Weitere alternative Befestigungsmöglichkeiten zur Fixierung des Kalibrierstifts 15 zum Kalibrierstifthalter 14 sind ebenfalls möglich, die insbesondere ein schnelles Lösen und Auswechseln eines Kalibrierstiftes 15 ermöglichen. Dadurch kann ein schneller Austausch des Kalibrierstiftes 15 beim Verschleiß als auch ein schnelles Umrüsten auf ein anderes zu fertigendes Endmaß ermöglicht sein.

Die Figur 3 zeigt eine schematische Ansicht von oben auf den Kalibrierstifthalter 14. Dadurch wird deutlich, dass sowohl der erste als auch der zweite Führungsabschnitt 21, 26 sich über die gesamte Länge gleichförmig erstrecken. Des Weiteren wird aus Figur 3 ebenso wie aus Figur 1 ersichtlich, dass ein Außenumfangsabschnitt des Kalibrierstiftes 15 gegenüber den Seitenflächen 27 des zweiten Führungsabschnittes 26 geringfügig hervorstehen. Diese hervorstehenden Abschnitte dienen zur Kalibrierung der Vertiefung 30. Eine solche Anordnung ermöglicht auch, dass der Kalibrierstift 15 in einem größtmöglichen Umfang abgestützt wird.

Figur 4 zeigt eine Stirnansicht auf das Befestigungselement 36 am Kalibrierstifthalter 14. Dabei ist der Kopf des Befestigungselementes 36 kleiner als der Querschnitt oder die Stirnfläche 35 des ersten Führungsabschnitts 21 ausgebildet, damit dieser Kalibrierstifthalter 14 auch entlang der Führung 19 vollständig verfahrbar und hin durchführbar ist.

In Figur 5 ist eine perspektivische Ansicht des Werkstücks 32 dargestellt, bei welchem die Vertiefung 30 in der Durchbrechung 31 auf ein Endmaß zu bearbeiten beziehungsweise zu kalibrieren ist. Eine solche Bearbeitung findet nach dem Härten des Werkstücks 32 statt. Beispielsweise werden ein oder mehrere Werkstücke 32 auf den zylindrischen Körper 17 der Führungsbuchse 12 aufgesetzt, wobei diese an dem Flanschabschnitt 18 anliegen. Eine gegenüber liegende Stirnseite des Flanschabschnitts 18 kann auf einem Werkzeugtisch aufliegen oder daran befestigt sein. Darauf folgend wird der Kalibrierstifthalter 14 in die Führung 19 der Führungsbuchse 12 und ebenso in die Durchbrechung 31 des Werkstücks 32 eingesetzt. Der Kalibrierstift 15 ist dabei zunächst entfernt von der Durchbrechung 31 vorgesehen. Beispielsweise kann darauf folgend an dem zuerst eingesetzten Ende des Kalibrierstifthalters 14 an einer nicht näher dargestellten Aufnahme ein Werkzeug angreifen, welches eine Zugkraft auf den Kalibrierstifthalter 14 aufbringt, so dass dieser entlang der Führung 19 durch das oder die Werkstücke 32 hindurch geführt wird, wobei dann der Kalibrierstift 15 die Vertiefung 30 durchfährt. Eine Situation kurz vor dem Eingreifen des Kalibrierstifts 15 in die Vertiefung 30 ist in Figur 6 dargestellt. Während dem Durchfahren des Kalibrierstiftes 15 durch die Vertiefung 30 erfolgt ein Aufweiten der Vertiefung auf ein Endmaß.

Alternativ kann der Kalibrierstifthalter 15 auch mit einer Druckkraft für die Kalibrierung beaufschlagt werden.

Das in den Figuren 5 und 6 dargestellte Werkstück ist beispielsweise ein Zahnrad mit einer Passfedernut. Alternativ können auch weitere Antriebsräder oder dergleichen vorgesehen sein.

## Patentansprüche

1. Kalibrierwerkzeug zur Bearbeitung einer Vertiefung (30) die vorzugsweise als Paßfedernut ausgeführt ist in einem Werkstück (32) auf ein Endmaß, wobei die Vertiefung (30) in einer Durchbrechung (31) des Werkstücks (32) angeordnet ist, **dadurch gekennzeichnet,**
- **dass** ein Kalibrierstifthalter (14) vorgesehen ist, der zumindest einen Kalibrierstift (15) aufnimmt und
- **dass** eine Führungsbuchse (12) mit einer U-förmigen Führung (19) vorgesehen ist, in welche der Kalibrierstifthalter (14) einsetzbar ist und der Kalibrierstift (15) gegenüber der U-förmigen Führung (19) nach außen hervorsteht und der Kalibrierstifthalter (14) entlang der U-förmigen Führung (19) verschiebbar ist,
- wobei nach dem Einsetzen der Führungsbuchse (12) und des Kalibrierstifthalters (14) in die Durchbrechung (31) des Werkstücks (32) und beim Hindurchführen des Kalibrierstifts (15) durch die Vertiefung (30) der Kalibrierstift (15) zwei einander gegenüber liegende Seitenflächen der Vertiefung (30) auf ein Endmaß aufweitet.

2. Kalibrierwerkzeug nach Anspruch 1, **dadurch gekennzeichnet, dass** der Kalibrierstifthalter (14) als längliche Leiste ausgebildet ist, welche einen ersten Führungsabschnitt (21) aufweist, der im Querschnitt komplementär zur U-förmigen Führung (19) der Führungsbuchse (12) ist.

3. Kalibrierwerkzeug nach Anspruch 2, **dadurch gekennzeichnet, dass** der Querschnitt des Kalibrierstifthalters (14) rechteckförmig oder quadratisch ist.

4. Kalibrierwerkzeug nach einem der vorhergehenden Ansprüche, **dadurch gekennzeichnet, dass** der Kalibrierstifthalter (14) einen zweiten Führungsabschnitt (26) aufweist, welcher dem ersten Führungsabschnitt (21) gegenüber liegt und der einen zur zu bearbeitenden Vertiefung (30) komplementären Querschnitt aufweist.

5. Kalibrierwerkzeug nach einem der vorhergehenden Ansprüche, **dadurch gekennzeichnet, dass** der Kalibrierstift (15) seitlich gegenüber zwei seitlichen Führungsflächen (27) des zweiten Führungsabschnitts (26) hervorsteht.

6. Kalibrierwerkzeug nach Anspruch 4, **dadurch gekennzeichnet, dass** der zweite Führungsabschnitt (26) zwei seitliche Führungsflächen (27) aufweist, die im Abstand ein Untermaß gegenüber der Breite der auf Endmaß zu bearbeitenden Vertiefung (30) in der Durchbrechung (31) des Werkstücks (32) welches vorzugsweise ein Zahnrad mit einer Passfedernut ist, aufweisen.

7. Kalibrierwerkzeug nach Anspruch 4, **dadurch gekennzeichnet, dass** der Kalibrierstift (15) gegenüber einer Oberseite des zweiten Führungsabschnitts (26) hervorsteht.

8. Kalibrierwerkzeug nach einem der vorhergehenden Ansprüche, **dadurch gekennzeichnet, dass** der Kalibrierstift (15) mit seiner Längsachse rechtwinklig zur Längsachse des Kalibrierstifthalters (14) angeordnet ist.

9. Kalibrierwerkzeug nach einem der vorhergehenden Ansprüche, **dadurch gekennzeichnet, dass** der Kalibrierstift (15) in einer Bohrung der Leiste des Kalibrierstifthalters (14) auswechselbar zumindest mit einem Klemm-, Spann- oder Befestigungselement (36), insbesondere mit einer Befestigungsschraube, in der Bohrung fixiert ist.

10. Kalibrierwerkzeug nach einem der vorhergehenden Ansprüche, **dadurch gekennzeichnet, dass** an einer Stirnseite des Kalibrierstifthalters (14) eine Aufnahme für ein Zug-, Druck- oder Presswerkzeug vorgesehen ist.

11. Kalibrierwerkzeug nach einem der vorhergehenden Ansprüche, **dadurch gekennzeichnet, dass** der Kalibrierstift (15) als zylindrischer Stift mit Endbearbeitungsmaß ausgebildet ist.

12. Kalibrierwerkzeug nach einem der vorhergehenden Ansprüche, **dadurch gekennzeichnet, dass** der Kalibrierstift (15) als Wendestift mit zwei voneinander abweichenden Endbearbeitungsmaßen ausgebildet ist.

13. Kalibrierwerkzeug nach einem der vorhergehenden Ansprüche, **dadurch gekennzeichnet, dass** der Kalibrierstift (15) als Pressstift aus einem gehärteten Material oder Hartmetall besteht.

14. Kalibrierwerkzeug nach einem der vorhergehenden Ansprüche, **dadurch gekennzeichnet, dass** die Führungsbuchse einen zylindrischen Körper (17) der an den Durchmesser der Durchbrechung (31) des zu bearbeitenden Werkstücks (32) angepasst wird, so dass diese mit Spiel in das Werkstück eingeführt werden kann sowie mit einer durchgehenden Längsnut als U-förmige Führung (19) ausgebildet ist, der an einem Ende einen Flanschabschnitt (18) aufweist.

15. Kalibrierwerkzeug nach einem der vorhergehenden Ansprüche, **dadurch gekennzeichnet, dass** dieses zur Bearbeitung eines Werkstücks vorgesehen ist, welches ein Zahnrad mit einer Passfedernut ist.

## Claims

1. Calibration tool for machining a recess (30) in a workpiece (32) to final dimensions, where the recess (30), which is preferably designed as a feather key groove, is located in a through-hole (31) of the workpiece (32), **characterized**
- **in that** a calibration pin holder (14) is provided, holding at least one calibration pin (15) and
- **in that** a guide sleeve (12) with U-shaped guide groove (19) is provided, into which the calibration pin holder (14) can be inserted, that the calibration pin (15) protrudes outwards with respect to the U-shaped guide groove (19) and that the calibration pin holder (14) can be moved along the U-shaped guide groove (19),
- wherein, after inserting the guide sleeve (12) and the calibration pin holder (14) into the through-hole (31) of the workpiece (32), the calibration pin (15) widens two opposite lateral surfaces of the recess (30) to final dimensions by moving the calibration pin (15) through the said recess (30).

2. Calibration tool according to claim 1, **characterized in that** the calibration pin holder (14) is designed as an elongated strip with a guiding section (21) whose cross section is complementary to the U-shaped guide groove (19) of the guide sleeve (12).

3. Calibration tool according to claim 2, **characterized in that** the cross section of the calibration pin holder (14) is rectangular or square.

4. Calibration tool according to one of the preceding claims, **characterized in that** the calibration pin holder (14) has a second guiding section (26) that is opposite to the first guiding section (21) and whose cross-section is complementary to the recess (30) to be machined.

5. Calibration tool according to one of the preceding claims, **characterized in that** the calibration pin (15) protrudes laterally with respect to the two lateral guiding surfaces (27) of the second guiding section (26).

6. Calibration tool according to claim 4, **characterized in that** the second guiding section (26) has two lateral guiding surfaces (27) that are spaced at a distance smaller than the width of the recess (30) to be machined to final dimensions in the through-hole (31) of the workpiece (32), which is preferably a toothed wheel with a feather key groove.

7. Calibration tool according to claim 4, **characterized in that** the calibration pin (15) protrudes with respect to an upper side of the second guiding section (26).

8. Calibration tool according to one of the preceding claims, **characterized in that** the longitudinal axis of the calibration pin (15) is arranged at right angles to the longitudinal axis of the calibration pin holder (14).

9. Calibration tool according to one of the preceding claims, **characterized in that** the calibration pin (15) is fixed replaceably in a bore on the strip of the calibration pin holder (14) at least by means of a clamping, tensioning or fastening element, in particular by means of a fastening screw.

10. Calibration tool according to claim 1, **characterized in that** a seat for a pulling tool, press tool or pressing tool is provided on one face side of the calibration pin holder (14).

11. Calibration tool according to one of the preceding claims, **characterized in that** the calibration pin (15) is designed as a cylindrical pin with dimensions that correspond to the final machining dimensions.

12. Calibration tool according to one of the preceding claims, **characterized in that** the calibration pin (15) is designed as a reversible pin with two different finishing dimensions.

13. Calibration tool according to one of the preceding claims, **characterized in that** the calibration pin (15) is designed as a press pin made of hardened material or carbide.

14. Calibration tool according to one of the preceding claims, **characterized in that** the guide sleeve has a cylindrical body, which is adapted to the diameter of the through-hole (31) of the workpiece (32) to be machined so that the guide sleeve (12) can be introduced with play into the workpiece, and is designed with a continuous longitudinal U-shaped guide groove (19) and a flange section (18) at one end.

15. Calibration tool according to one of the preceding claims, **characterized in that** it is intended for machining a workpiece, which is a toothed wheel with a feather key groove.

## Revendications

1. Outil de calibrage pour usiner, à la cote finale, un évidement (30), conçu de préférence comme une rainure de clavette, dans une pièce à usiner (32), l'évidement (30) se trouvant dans un trou débouchant (31) de ladite pièce (32), **caractérisé**
- **en ce qu'**un porte-broche (14) est prévu, permettant de recevoir au moins une broche de calibrage (15) et
- **en ce qu'**un manchon de guidage (12) est prévu, doté d'une rainure de guidage en forme de U (19), dans lequel le porte-broche (14) peut être inséré, que la broche de calibrage (15) dépasse vers l'extérieur par rapport à la rainure de guidage en forme de U (19) et que le porte-broche (14) peut être déplacé le long de la rainure de guidage en forme de U (19),
- et **en ce que**, après avoir inséré le manchon de guidage (12) et le porte-broche (14) dans le trou débouchant (31) de la pièce à usiner (32), la broche de calibrage (15) élargit deux surfaces latérales opposées de l'évidement (30) à la cote finale en faisant passer la broche de calibrage (15) au travers ledit évidement (30).

2. Outil de calibrage selon la revendication 1, **caractérisé en ce que** le porte-broche (14) est conçu sous la forme d'une barre allongée avec une première section de guidage (21) dont la section transversale est complémentaire de la rainure de guidage en forme de U (19) du manchon de guidage (12).

3. Outil de calibrage selon la revendication 2, **caractérisé en ce que** la section transversale du porte-broche (14) est rectangulaire ou carrée.

4. Outil de calibrage selon l'une des revendications précédentes, **caractérisé en ce que** le porte-broche (14) présente une deuxième section de guidage (26) opposée à la première section de guidage (21) et dont la section transversale est complémentaire de l'évidement (30) à usiner.

5. Outil de calibrage selon l'une des revendications précédentes, **caractérisé en ce que** la broche de calibrage (15) dépasse latéralement par rapport à deux surfaces de guidage latérales (27) de la deuxième section de guidage (26).

6. Outil de calibrage selon la revendication 4, **caractérisé en ce que** la deuxième section de guidage (26) comporte deux surfaces de guidage latérales (27) dont la distance est inférieure à la largeur de l'évidement (30) à usiner à la cote finale se trouvant dans le trou débouchant (31) de la pièce à usiner (32), qui est de préférence une roue dentée avec une rainure de clavette.

7. Outil de calibrage selon la revendication 4, **caractérisé en ce que** la broche de calibrage (15) fait saillie par rapport à un côté supérieur de la deuxième section de guidage (26).

8. Outil de calibrage selon l'une des revendications précédentes, **caractérisé en ce que** l'axe longitudinal de la broche de calibrage (15) est perpendiculaire à l'axe longitudinal du porte-broche (14).

9. Outil de calibrage selon l'une des revendications précédentes, **caractérisé en ce que** la broche de calibrage (15) est fixée de manière remplaçable dans un alésage sur la barre du porte-broche (14) au moins au moyen d'un élément de serrage ou de fixation, notamment au moyen d'une vis de fixation.

10. Outil de calibrage selon la revendication 1, **caractérisé en ce qu'**un logement est prévu sur une face du porte-broche (14) pour recevoir un outil de traction, un outil de pression ou un outil de pressage.

11. Outil de calibrage selon l'une des revendications précédentes, **caractérisé en ce que** la broche de calibrage (15) est conçue comme une tige cylindrique ayant des dimensions correspondant aux dimensions de finition.

12. Outil de calibrage selon l'une des revendications précédentes, **caractérisé en ce que** la broche de calibrage (15) est conçue comme une tige réversible avec deux dimensions de finition différentes.

13. Outil de calibrage selon l'une des revendications précédentes, **caractérisé en ce que** la broche de calibrage (15) est conçue sous la forme d'une tige de pression en matériau durci ou en carbure de tungstène.

14. Outil de calibrage selon l'une des revendications précédentes, **caractérisé en ce que** le manchon de guidage (12) présente un corps cylindrique adapté au diamètre du trou débouchant (31) de la pièce à usiner (32) de sorte que le manchon de guidage (12) peut être introduit avec jeu dans la pièce à usiner, et est doté d'une rainure de guidage longitudinale continue (19) et d'une bride (18) à une extrémité.

15. Outil de calibrage selon l'une des revendications précédentes, **caractérisé en ce qu'**il est destiné à usiner une pièce qui est une roue dentée avec une rainure de clavette.
